# EUROPEAN PATENT SPECIFICATION

(11) **EP 3 896 492 B1**
(45) Date of publication and mention of the grant of the patent: **28.01.2026**
(21) Application number: 19895621.1
(22) Date of filing: 11.07.2019
(51) Int. Cl.: G01S 17/89, G01S 7/481, G01S 13/89, G01N 21/3581

(54) **TERAHERTZ MULTIMODE REAL-TIME IMAGING SYSTEM**
TERAHERTZ-MEHRMODEN-ECHTZEITABBILDUNGSSYSTEM
SYSTÈME D'IMAGERIE EN TEMPS RÉEL MULTIMODE TÉRAHERTZ

(30) Priority: 13.12.2018 CN 201811522278
(43) Date of publication of application: 20.10.2021
(73) Proprietor: Beijing Research Institute of Telemetry, Beijing 100094 (CN); Aerospace Long March Launch Vehicle Technology Co. Ltd., Beijing 100176 (CN)
(72) Inventor: MOU, Jinchao, Beijing 100094 (CN); XU, Rongrong, Beijing 100094 (CN); LIU, Hao, Beijing 100094 (CN); YU, Yong, Beijing 100094 (CN); LI, Lianghai, Beijing 100094 (CN); LIU, Feng, Beijing 100094 (CN)
(74) Representative: Lavoix
(86) International application number: PCT/CN2019/095548
(87) International publication number: WO 2020/119106

(56) References cited:
- CN-A- 102 104 363
- CN-A- 103 163 145
- CN-A- 104 048 761
- CN-A- 106 054 182
- CN-A- 106 597 438
- CN-A- 109 655 841
- CN-B- 104 048 761
- JP-A- 2017 161 450
- US-A1- 2001 043 109
- US-A1- 2011 304 498
- ANONYMOUS: "Catadioptric system - Wikipedia, the free encyclopedia", 8 March 2015 (2015-03-08), pages 1 - 6, XP055937090, Retrieved from the Internet <URL:https://web.archive.org/web/20150308223117/https://en.wikipedia.org/wiki/Catadioptric_system> [retrieved on 20220630]
- ANONYMOUS: "Catadioptric system - Wikipedia, the free encyclopedia", 8 March 2015 (2015-03-08), pages 1 - 6, XP055937090, Retrieved from the Internet <URL:https://web.archive.org/web/20150308223117/https://en.wikipedia.org/wiki/Catadioptric_system> [retrieved on 20220630]

## Description

This application claims the priority to Chinese Patent Application No.201811522278.X, titled "TERAHERTZ MULTIMODE REAL-TIME IMAGING SYSTEM", filed on December 13, 2018 with the Chinese Patent Office.

### FIELD

The present disclosure relates to the technical field of terahertz imaging, and in particular to a terahertz real-time imaging system.

### BACKGROUND

Terahertz (THz, where 1THz is equal to 10¹²Hz) wave is an electromagnetic radiation with a frequency ranging from 0.1THz to 10THz (corresponding to a wavelength ranging from 3mm to 30µm) and is between microwave radiation and infrared radiation in electromagnetic spectrum. The terahertz wave is very important in aerospace situational awareness and aerospace target monitoring and tracking.

In terms of the propagation property, the attenuation of the terahertz wave propagating in high altitude, adjacent space and outer space is very small, which is much lower than the attenuation of the terahertz wave propagating in near-ground space. Therefore, the terahertz wave may be used to perform long-distance target detection and tracking in high altitude, adjacent space and outer space.

In terms of features of a target, a shape and shadow (contour) feature of a target obtained in terahertz frequency band is clear than the feature of the target obtained in microwave frequency band, and the electromagnetic environment of the terahertz frequency band is more pure, thereby effectively improving the ability of detecting and identifying a target in a complex environment.

In terms of technology, a detection information system operating in terahertz frequency band may be realized based on technical advantages of microwave frequency band and infrared frequency band. For example, timeliness of detecting target may be improved based on an infrared focal plane imaging architecture, and anti-interference performance in a complex environment may be improved based on the microwave coherent detection function. Based on the technical advantages of the microwave frequency band and the infrared frequency band, a terahertz real-time imaging information system having the advantages of miniaturization, high resolution, good real-time performance, wide field of view, and coherent detection, may be realized, thereby effectively improving the ability of detecting and identifying a target.

The patent CN104048761B provides a terahertz semi-active color focal plane camera which comprises an antenna feeder module, W terahertz irradiation source modules, a terahertz focal plane multichannel coherent receiving module, an intermediate frequency signal processing module and a local oscillator reference source, wherein the W is the number of pre-obtained colors, and the W is a natural number which is equal to or larger than 1. Each terahertz irradiation source module sends terahertz irradiation signals for irradiating on a detected target. Each terahertz irradiation source module comprises a terahertz irradiation signal frequency multiplier and a terahertz antenna. Local oscillator signals generated by the local oscillator reference source are subjected to frequency multiplication through the terahertz irradiation signal frequency multiplier, radiated by the terahertz antenna, and then, irradiates on the detected target. Document XP55937090 provides a catadioptric system. The catadioptric optical system is one where refraction and reflection are combined in an optical system, usually via lenses (dioptrics) and curved mirrors (catoptrics). Catadioptric combinations are used in focusing systems such as search lights, headlamps, early lighthouse focusing systems, optical telescopes, microscopes, and telephoto lenses. Other optical systems that use lenses and mirrors are also referred to as "catadioptric" such as surveillance catadioptric sensors. The patent US20110304498 provides a signal processor. The signal processor for a submillimeter wavelength active radar system processes signals received and downconverted by the radar system, the downconverted signals corresponding to a given pixel of the field of view having time varying amplitude and phase components which have a periodic component which is dependent on content. Information about the content is discriminated from the periodic component. The patent US20010043109 provides a frequency multiplier circuit. The frequency multiplier circuit includes: a source oscillator configured to generate a source oscillator signal using a crystal oscillator; and n frequency multiplier circuits (n is an integer which is 2 or more), each of which includes a 90° phase shifter circuit configured to shift the phase of an input signal by 90°, and a mixer configured to generate a doubled signal of the input signal on the basis of the input signal and an output signal of the 90° phase shifter circuit, The conventional terahertz imaging systems generally have the following problems.

First, the conventional terahertz imaging system operates in a single operation mode, thus the requirements of all-weather monitoring and imaging and tracking a suspected target cannot be met.

Secondly, with the conventional terahertz imaging system, two imaging manner are provided. In a first imaging manner, real-time staring imaging is realized based on a focal plane imaging architecture. Phase information of a target cannot be obtained in the first imaging manner. In a second imaging manner, coherent detection is performed based on a synthetic aperture radar imaging architecture. The second imaging manner has the following shortcomings. (1) Real-time performance is bad. (2) Imaging is performed based on relative movement of the system and the target, and the system cannot remain relatively stationary. (3) Front-view imaging cannot be realized, thus observation angle and field of view are limited.

Third, the system architecture of the conventional terahertz imaging system is inflexible and does not have standardized and pedigree equipment potential.

### SUMMARY

According to the present invention, a terahertz real-time imaging system as defined in the appended set of claims is provided to overcome the shortcomings of the conventional technology. The system may operate in four operation modes: passive non-coherent mode, passive coherent mode, active non-coherent mode, and active coherent mode. With the system, the application requirements of all-weather silent monitoring, imaging and tracking of a suspected target, and the like can be met, and contrast of an image in a case that quality of the image deteriorates due to environmental factors can be improved.

The objective of the present disclosure is achieved by performing the following technical solutions. A terahertz multimode real-time imaging system includes a terahertz quasi-optical feeding module, a terahertz focal plane imaging array front-end module, an intermediate frequency readout circuit, a signal processing and control module, a display module, a baseband signal generation module, and a terahertz transmission signal and local oscillation signal module. The terahertz quasi-optical feeding module is configured to receive a terahertz signal from a target, and transmit the terahertz signal to the terahertz focal plane imaging array front-end module. The terahertz focal plane imaging array front-end module is configured to convert the received terahertz signal to a terahertz current, perform frequency reduction on the terahertz current to obtain an intermediate frequency signal, and transmit the intermediate frequency signal to the intermediate frequency readout circuit. The intermediate frequency readout circuit is configured to obtain the intermediate frequency signal from the terahertz focal plane imaging array front-end module, perform amplification and analog-to-digital conversion on the intermediate frequency signal to obtain a digital signal, and transmit the digital signal to the signal processing and control module. The signal processing and control module is configured to receive and process the digital signal to generate an image and transmit the image to the display module. The display module is configured to receive and display the image and provide a manual control interface. The baseband signal generation module is configured to generate a baseband signal and transmit the baseband signal to the terahertz transmission signal and local oscillation signal module. The terahertz transmission signal and local oscillation signal module is configured to perform frequency multiplication and amplification on the baseband signal to generate a local oscillation signal and a terahertz transmission signal, where the local oscillation signal is transmitted to the terahertz focal plane imaging array front-end module to serve as a local oscillator reference signal, and the terahertz transmission signal irradiates the target.

In the terahertz multimode real-time imaging system, the terahertz quasi-optical feeding module includes a terahertz quasi-optical lens group and a servo control unit. The terahertz quasi-optical lens group is connected to the servo control unit, and the servo control unit is configured to control displacement of the terahertz quasi-optical lens group to adjust a focal length and a field of view of the terahertz quasi-optical lens group. The terahertz quasi-optical lens group is configured to receive the terahertz signal from the target and transmit the terahertz signal to the terahertz focal plane imaging array front-end module.

In the terahertz multimode real-time imaging system, the terahertz focal plane imaging array front-end module includes a terahertz micro lens array, a terahertz focal plane array chip, an intermediate frequency output network, and a local oscillator power distribution network. The terahertz micro lens array and the terahertz focal plane array chip are configured to operate together to convert the received terahertz signal to the terahertz current and perform frequency reduction on the terahertz current to obtain the intermediate frequency signal. The intermediate frequency output network is configured to obtain the intermediate frequency signal from the terahertz focal plane array chip. The local oscillator power distribution network is configured to provide a point-to-point local oscillator power for a detection/mixing antenna unit in the terahertz focal plane array chip.

In the terahertz multimode real-time imaging system, the intermediate frequency readout circuit includes a matrix switch and a readout circuit array. The matrix switch is controlled by a control instruction unit to gate rows and columns to transmit the intermediate frequency signal to the readout circuit array. The readout circuit array includes a number of channels, where the number of the channels corresponds to an array scale of the matrix switch, each of the channels includes a power amplifier and an analog-to-digital converter, the power amplifier is configured to amplify the intermediate frequency signal, and the analog-to-digital converter is configured to convert the amplified intermediate frequency signal to the digital signal and transmit the digital signal to the signal processing and control module.

In the terahertz multimode real-time imaging system, the signal processing and control module includes the control instruction unit and a signal processing unit. The signal processing unit is configured to receive and process the digital signal to generate the image, analyze features of the target, and transmit the image to the display module. The control instruction unit is configured to generate control instructions for respectively controlling the servo control unit in the terahertz quasi-optical feed module to adjust a focal length and a field of view of the terahertz quasi-optical lens group, controlling the matrix switch in the intermediate frequency readout circuit to determine a readout sequence of pixels in the terahertz focal plane imaging array front-end module, and controlling a baseband signal control unit in the baseband signal generation module to generate a baseband signal wave.

In the terahertz multimode real-time imaging system, the display module includes a display screen and a manual control unit. The manual control unit is configured to control the control instruction unit. The display screen is configured to receive and display the image.

In the terahertz multimode real-time imaging system, the baseband signal generation module includes the baseband signal control unit, a direct digital frequency synthesizer, a clock, a D-multiplied frequency multiplier, a baseband mixer and an E-multiplied frequency multiplier. A baseband output signal from the baseband signal control unit and a clock signal from the clock are inputted to the direct digital frequency synthesizer. The direct digital frequency synthesizer is configured to synthesize the baseband output signal and the clock signal to obtain a synthesized signal, and input the synthesized signal to the baseband mixer. The D-multiplied frequency multiplier is configured to receive and process the clock signal to obtain a D-multiplied signal, and input the D-multiplied signal to the baseband mixer. The baseband mixer is configured to receive and process the D-multiplied signal and the synthesized signal to obtain a mixed signal, and input the mixed signal to the E-multiplied frequency multiplier. The E-multiplied frequency multiplier is configured to receive and process the mixed signal to obtain an E-multiplied signal, and input the E-multiplied signal to the terahertz transmission signal and local oscillation signal module.

In the terahertz multimode real-time imaging system, the terahertz transmission signal and local oscillation signal module includes an N-multiplied frequency multiplier, a first drive amplifier, a first single-pole double-throw switch, a second single-pole double-throw switch, a coupler, a second drive amplifier, an M-multiplied frequency multiplier and a terahertz horn antenna. The N-multiplied frequency multiplier is configured to receive and process the E-multiplied signal to obtain an N-multiplied signal, and input the N-multiplied signal to the first drive amplifier. The first drive amplifier is configured to receive and process the N-multiplied signal to obtain a first amplified signal. The first amplified signal is controlled by the first single-pole double-throw switch to be transmitted via a channel 73A or a channel 73B. The first amplified signal is directly fed into a local oscillator power distribution network in a case that the first amplified signal is transmitted via the channel 73A. The first amplified signal is controlled by the second single-pole double-throw switch to be transmitted via a channel 74A or a channel 74B in a case that the first amplified signal is transmitted via the channel 73B. The first amplified signal is inputted, via the coupler, to the M-multiplied frequency multiplier and the second drive amplifier in a case that the first amplified signal is transmitted via the channel 74A. The second drive amplifier is configured to directly feed the first amplified signal into the local oscillator power distribution network. The first amplified signal is directly inputted to the M-multiplied frequency multiplier in a case that the first amplified signal is transmitted via the channel 74B. The M-multiplied frequency multiplier is configured to receive and process the first amplified signal to obtain an M-multiplied signal, and transmit the M-multiplied signal into a free space by using the terahertz horn antenna.

In the terahertz multimode real-time imaging system, in a case that f₆₀₁ represents a frequency of the baseband output signal and f₆₀₃ represents a frequency of the clock signal, f₆₀₂, obtained based on an equation of f₆₀₂=f₆₀₁+ f₆₀₃, represents a frequency of the synthesized signal, a frequency f₆₀₄ of the D-multiplied signal is obtained based on an equation of f₆₀₄=D*f₆₀₃, a frequency f₆₀₅ of the mixed signal is obtained based on an equation of f₆₀₅=f₆₀₄-f₆₀₂, and a frequency f₆₀₆ of the E-multiplied signal is obtained based on an equation of f₆₀₆= E*f₆₀₅.

In the terahertz multimode real-time imaging system, a frequency f₇₀₁ of the N-multiplier signal is obtained based on an equation of f₇₀₁=N*f₆₀₆, a frequency f₇₀₂ of the first amplified signal is obtained based on an equation of f₇₀₂=f₇₀₁, and a frequency f₇₀₇ of the M-multiplied signal is obtained based on an equation of f₇₀₇=M*f₇₀₂.

Compared with the conventional technology, the following beneficial effects can be achieved with the present disclosure.
(1) In the present disclosure, a terahertz signal from a target and a terahertz signal from environment are inputted to a terahertz quasi-optical feeding module, a terahertz focal plane imaging array front-end module converts the terahertz signals to intermediate frequency signals, and four operation modes of passive non-coherent mode, passive coherent mode, active non-coherent mode, and active coherent mode are flexibly switched by switching the channels respectively for a transmission signal and a local oscillation signal.
(2) In the present disclosure, switching between a coherent reception mode and a non-coherent reception mode is performed by using a terahertz focal plane array chip based on terahertz Schottky diodes and a local oscillator power distribution network, thereby realizing staring imaging and obtaining phase information simultaneously.
(3) In the terahertz focal plane imaging array chip according to the present disclosure, a two-dimensional high-density array is formed with flat and compact terahertz pixels, facilitating flexible design of array scale and flexible splicing of sub-arrays with different scales.
(4) In the present disclosure, positions of lenses in a terahertz quasi-optical lens group are controlled by a servo control unit, thereby controlling the focal length and the field of view of imaging.
(5) In the present disclosure, a baseband signal having high purity and low phase noise is obtained by performing baseband mixing, thereby ensuring the sensitivity of the system operating in the passive coherent mode, the active non-coherent mode, and the active coherent mode.

### BRIEF DESCRIPTION OF THE DRAWINGS

Various advantages and benefits of the present disclosure are apparent to those skilled in the art by reading the detailed description of the preferred embodiments hereinafter. The drawings are only used for illustrating the preferred embodiments, and are not intended to limit the present disclosure. In the drawings, the same reference numerals represent the same components. In the drawings:
Figure 1 is a block diagram of a terahertz multimode real-time imaging system;
Figure 2 is a schematic structural diagram of a terahertz quasi-optical lens group;
Figure 3 is a schematic structural diagram of a terahertz focal plane imaging array front-end;
Figure 4 is a schematic diagram of sub-array splicing in a terahertz focal plane imaging array front-end;
Figure 5 is a schematic structural diagram of a pixel in a terahertz focal plane imaging array; and
Figure 6 is a topological block diagram of an intermediate frequency readout circuit.

### DETAILED DESCRIPTION

Hereinafter, exemplary embodiments of the present disclosure are described in detail with reference to the drawings. Although exemplary embodiments of the present disclosure are shown in the drawings, it should be understood that the present disclosure may be implemented in various manners and should not be limited to the embodiments described below. These embodiments are provided for a more thorough understanding of the present disclosure and for entirely conveying the scope of the present disclosure to those skilled in the art. It should be noted that embodiments of the present disclosure and features in the embodiments may be combined with each other as long as there is no conflict. The present disclosure is described in detail below with reference to the drawings and in conjunction with the embodiments.

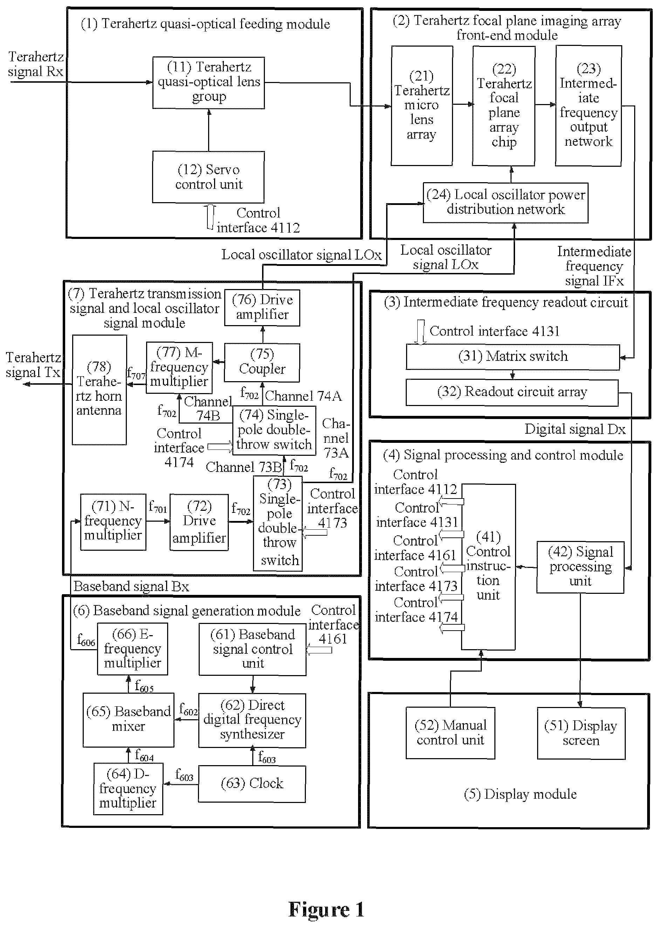

A terahertz multimode real-time imaging micro system is provided according to an embodiment of the present disclosure. As shown in Figure 1, the system includes a terahertz quasi-optical feeding module 1, a terahertz focal plane imaging array front-end module 2, an intermediate frequency readout circuit 3, a signal processing and control module 4, a display module 5, a baseband signal generation module 6, and a terahertz transmission signal and local oscillation signal module 7.

The terahertz quasi-optical feeding module 1 includes a terahertz quasi-optical lens group 11, a servo control unit 12, and a control interface 4112.

The terahertz focal plane imaging array front-end module 2 includes a terahertz micro lens array 21, a terahertz focal plane array chip 22, an intermediate frequency output network 23, and a local oscillator power distribution network 24.

The intermediate frequency readout circuit 3 includes a matrix switch 31, a readout circuit array 32, and a control interface 4131.

The signal processing and control module 4 includes a control instruction unit 41, a signal processing unit 42, a control interface 4112, a control interface 4131, a control interface 4161, a control interface 4173, and a control interface 4174.

The display module 5 includes a display screen 51 and a manual control unit 52.

The baseband signal generation module 6 includes a baseband signal control unit 61, a direct digital frequency synthesizer 62, a clock 63, a D-multiplied frequency multiplier 64, a baseband frequency mixer 65, an E-multiplied frequency multiplier 66, and a control interface 4161.

The terahertz transmission signal and local oscillation signal module 7 includes an N-multiplied frequency multiplier 71, a first drive amplifier 72, a first single-pole double-throw switch 73, a second single-pole double-throw switch 74, a coupler 75, a drive amplifier 76, an M-multiplied frequency multiplier 77, a terahertz horn antenna 78, a control interface 4173, and a control interface 4174.

### [Functions of modules in the system]

The terahertz quasi-optical feeding module 1 is configured to receive a terahertz signal Rx from a target and transmit the signal to the terahertz focal plane imaging array front-end module 2.

The terahertz focal plane imaging array front-end module 2 is configured to convert the received terahertz signal to a terahertz current, and perform frequency reduction on the terahertz current to obtain an intermediate frequency signal IFx. The intermediate frequency signal IFx is to be transmitted to the intermediate frequency readout circuit 3.

The intermediate frequency readout circuit 3 is configured to obtain the intermediate frequency signal IFx from the terahertz focal plane imaging array front-end module 2, and perform amplification and analog-to-digital conversion on the intermediate frequency signal to obtain a digital signal Dx. The digital signal Dx is to be transmitted to the signal processing and control module 4.

The signal processing and control module 4 is configured to process the digital signal to generate an image, analyze features of the target, and transmit the image to the display module 5. In addition, the signal processing and control module 4 is further configured to generate control instructions for performing the following three control functions: a function of controlling the servo control unit 12 in the terahertz quasi-optical feeding module 1 to adjust a focal length and a field of view of the terahertz quasi-optical lens group 11, a function of controlling the matrix switch 31 in the intermediate frequency readout circuit 3 to determine a readout sequence of the pixels in the terahertz focal plane imaging array front-end module 2, and a function of controlling a baseband signal control unit 61 in the baseband signal generation module 6 to generate a baseband signal wave.

The display module 5 is configured to display a terahertz image of the target and the environment, and provide a manual control interface.

The baseband signal generation module 6 is configured to generate a baseband signal Bx and transmit the baseband signal Bx to the terahertz transmission signal and local oscillation signal module 7.

The terahertz transmission signal and local oscillation signal module 7 is configured to receive an input signal from the baseband signal generation module 6, and generates a local oscillation signal LOx and a terahertz transmission signal Tx by performing frequency multiplication and amplification. The local oscillation signal is transmitted to the terahertz focal plane imaging array front-end module 2 to serve as a local oscillator reference signal. The terahertz transmission signal irradiates the target by using a terahertz horn antenna 78.

### [Module 1-terahertz quasi-optical feeding module]

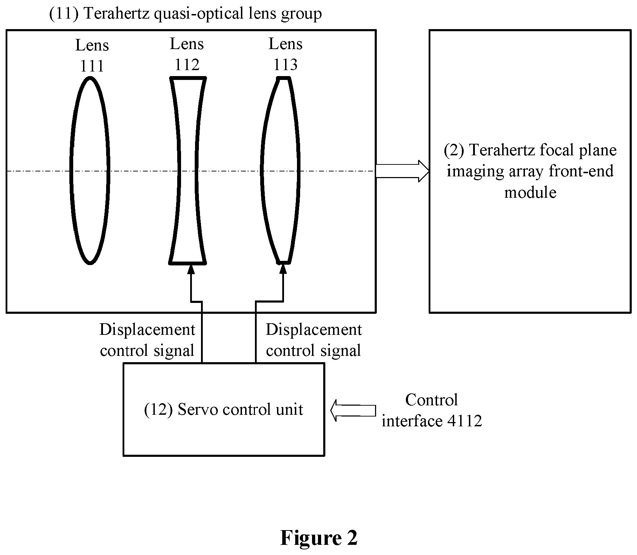

The terahertz quasi-optical lens group 11 includes at least three terahertz quasi-optical lenses respectively represented by lens 111, lens 112 ... lens 11(N-1), and lens 11N. The lens 111 is located at a position in a side of the system, and the lens 11N is located at a position close to the terahertz focal plane imaging array front-end module 2. Each of the terahertz quasi-optical lenses is made of a material, such as polytetrafluoroethylene, having a transmittance in the terahertz frequency band greater than or equal to 0.8 and a dielectric constant less than or equal to 5. The optical axes of the terahertz quasi-optical lenses are arranged on a same line. As shown in Figure 2, the lens 111 is fixed, the lens 112 to lens 11N may be moved along the optical axis, and the positions of the lens 112 to lens 11N are controlled by the servo control unit 12, thereby adjusting the focal length and the field of view.

### [Module 2-Terahertz focal plane imaging array front-end module]

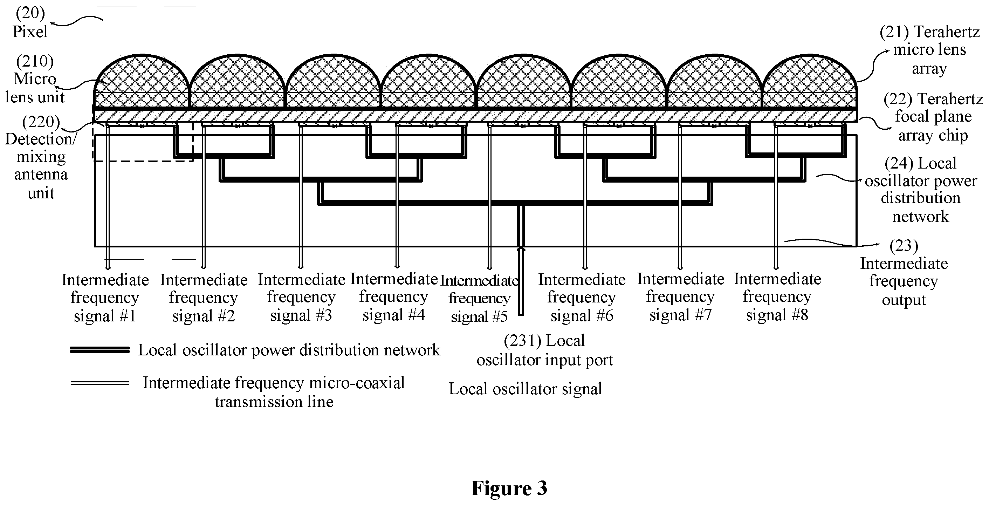

The terahertz micro lens array 21 and the terahertz focal plane array chip 22 operate together to process the terahertz spatial signal and perform frequency conversion. The intermediate frequency output network 23 is configured to obtain the intermediate frequency signal from the terahertz focal plane array chip 22. The local oscillator power distribution network 24 is configured to provide a point-to-point local oscillator power for the detection/mixing antenna unit 220 in the terahertz focal plane array chip 22, as shown in Figure 3.

Each of micro lens units 210 in the terahertz micro lens array 21 is a medium extended hemisphere formed by a hemisphere and a cylinder. With the medium extended hemispheres, the directionalities of the basic pixels in the terahertz focal plane array chip 22 are optimized, thereby increasing the radiation gains of the basic pixels. For each of the medium extended hemispheres, R represents a radius of a hemisphere, L represents a height of a cylinder, and R represents a radius of a cross section. The material of the extended hemisphere has a transmittance in the terahertz frequency band greater than or equal to 0.8, and has a dielectric constant less than or equal to 5, thereby reducing an impedance mismatch loss between the terahertz micro lens array 21 and the terahertz focal plane array chip 22. The micro lens units 210 are closely arranged to form a two-dimensional compound eye array having a scale of A*B.

Basic units in the terahertz focal plane array chip 22 are the detection/mixing antenna units 220, as shown in Figure 2. The detection/mixing antenna has the following features: adopting a differential antenna, such as a dipole, a butterfly antenna, a log periodic antenna, as a basic radiating unit; and adopting a diode as a frequency conversion unit, where the diode is arranged at a radio frequency feeding port of the differential antenna. The differential antenna converts a terahertz radiation to a terahertz current and transmits the terahertz current to the diode. The diode converts the terahertz current to a low-frequency current. In a case that the diode is loaded with a local oscillation signal, the detection/mixing antenna operates in a mixing mode; and in a case that the diode is not loaded with a local oscillation signal, the detection/mixing antenna operates in a detection mode. The low-frequency current is outputted from two terminals of the differential antenna. Furthermore, a compact detection/mixing detection antenna unit structure is provided according to the present disclosure to improve the frequency conversion efficiency of the detection/mixing antenna and ensure that the size of the basic unit in the terahertz focal plane array chip is within one square wavelength (that is, 1λ², where λ represents a wavelength of a terahertz signal). The compact detection/mixing detection antenna unit structure has the following features. (1) A dipole antenna or deformation of a dipole antenna (which are collectively referred to as a "dipole antenna" hereinafter) are adopted as a basic radiation unit. The typical length of the dipole antenna is equal to λ/2. (2) An electric coupled strip line parallel to an edge of the dipole may be arranged at a radio frequency feeding port of the dipole antenna to expand the bandwidth of the dipole antenna, where the typical width of the electric coupled strip line ranges from λ/20 to λ/10, and the typical length of the electric coupled strip line ranges from λ/8 to λ/3. (3) Band stop filters having a stop band center frequency of f_{Signal} (f_{Signal} is the operating frequency of the terahertz signal) is arranged at two ends of the dipole antenna, where each of the stop band filter has pass bands respectively corresponding to the local oscillator frequency band and the intermediate frequency band of the terahertz multimode real-time imaging system. (4) The typical implementation of the band stop filter may be expressed as a gap having a shape of a character " 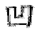 " or a gap having a shape of a character " 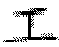 ", where the recessed part of the gap faces the radio frequency feeding port, thereby avoiding the dipole antenna generating a side lobe level and achieving a small gap size. The width of the stop band may be controlled by cascading multiple gaps having the shape of the character " 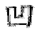 " and gaps having the shape of the character " 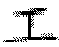 " that have different sizes. (5) To meet the detection requirement of the signals in the terahertz band, a planar terahertz Schottky diode may be preferably selected, which has a junction capacitance less than or equal to 2fF and has a cascade resistance less than or equal to 5Ω. (6) To reduce the loss in the terahertz frequency band and the crosstalk between the detection/mixing antenna units 220, a material, having a dielectric loss tangent tanδ less than or equal to 0.001, a dielectric constant εᵣ less than or equal to 5, and a thickness less than or equal to λ/[100(εᵣ)^{1/2}], is used as the substrate material of the detection/mixing antenna. A typical material is quartz.

The distance D between basic pixels in the terahertz focal plane array chip 22 ranges from of λ to 5λ. A diameter of each of the micro lenses in the terahertz micro lens array 21 is equal to the distance between basic pixels in the terahertz focal plane array chip 22, that is, D is equal to 2R. The scale of the array in the terahertz focal plane array chip 22 is A*B same as the scale of the terahertz micro lens array 21. The pixels on the medium side of the terahertz focal plane array chip 22 are closely attached to a plane side of the terahertz micro lens array 21. The pixels in the terahertz focal plane array chip 22 correspond to the micro lenses in the terahertz micro lens array 21 one-to-one, and a center of each of the pixels is arranged on an axis of a micro lens.

Basic transmission lines in the intermediate frequency output network 23 have a micro-coaxial structure. The basic transmission lines are used for outputting the intermediate frequency signal from the terahertz focal plane array chip 22. The array scale of the intermediate frequency output network 23 is A*B, same as the scale of the array in the terahertz focal plane array chip 22. The micro-coaxial structure has the following features. (1) An outer conductor and an inner conductor are included, and the inner conductor is electrically connected to an end of the detection/mixing antenna unit 220. (2) The cross section of the inner conductor in the micro-coaxial structure is in a shape of circular or square and has a diameter of a, the cross section of the outer conductor in the micro-coaxial structure is in a shape of circular or square and has a diameter of b, and a sum of a and b is less than or equal to λ, thereby avoiding generating a high-order mode at the intermediate frequency with the micro-coaxial structure.

A waveguide is used as a basic transmission line in the local oscillator power distribution network 24. The waveguide includes A*B local oscillator power distribution branches 240. The local oscillator power distribution network 24 includes one local oscillator input port 231 and A*B local oscillator output ports 242. The local oscillator input port 231 has a standard waveguide structure. A local oscillation signal is fed into the terahertz transmission signal and local oscillation signal module 7 via the local oscillator input port 231. Each of the local oscillator output ports 242 is a non-standard waveguide and operates in a TE mode. For each of the local oscillator output ports 242, the direction of the electric field is the same as the polarization direction of the dipole antenna in the detection/mixing antenna unit 220. Each of the diodes in the detection/mixing antenna unit 220 is arranged at a center of a local oscillator output port 242.

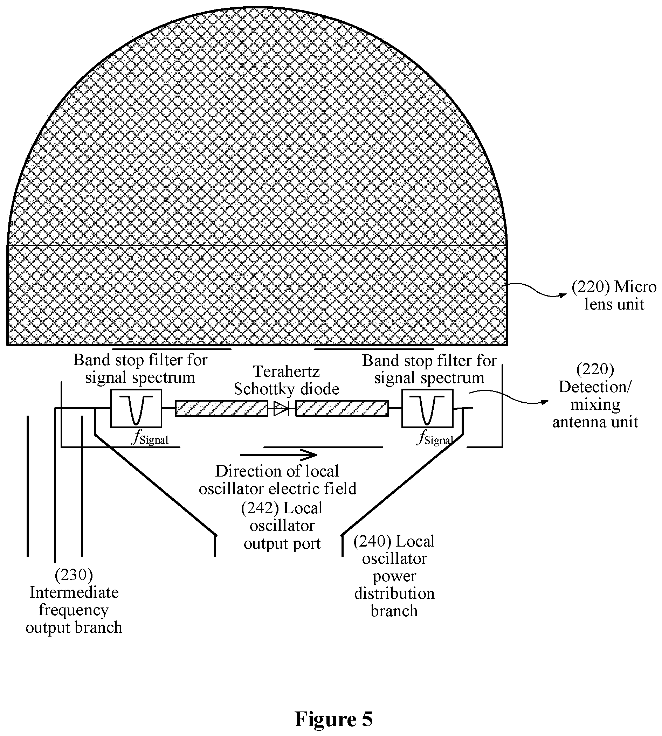

As shown in Figure 5, a pixel 20 in the terahertz focal plane imaging array front-end module 2 includes a micro lens unit 210, a detection/mixing antenna unit 220, an intermediate frequency output branch 230, and a local oscillator power distribution branch 240. The detection/mixing antenna unit 220 is arranged between the micro lens unit 210 and the local oscillator power distribution branch 240. A terahertz signal Tx is inputted to the detection/mixing antenna unit 220 via the micro lens unit 210, and a local oscillation signal LOx is inputted to the detection/mixing antenna unit 220 via the local oscillator power distribution branch 240.

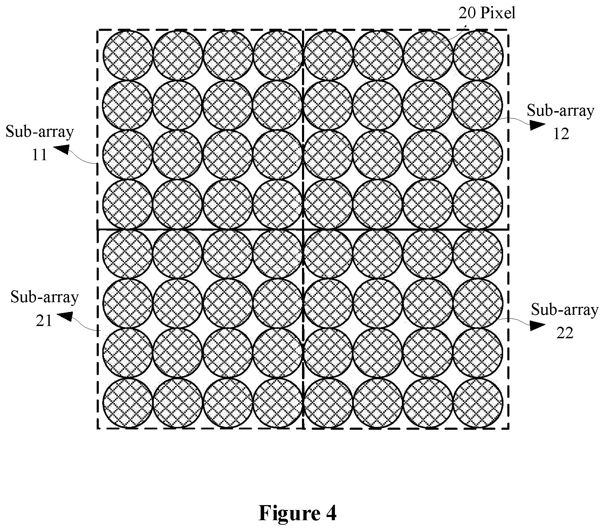

Figure 4 is a schematic diagram of sub-array splicing in a terahertz focal plane imaging array front-end. In a case that a terahertz focal plane imaging array front-end having an array scale of A*B is used as a sub-array and two-dimensional splicing is performed, M sub-arrays are formed in a row direction, N sub-arrays are formed in a column direction, and a terahertz focal plane array front-end having a large array scale of (M*A)*(N*B) is formed.

### [Module 3-Intermediate frequency readout circuit]

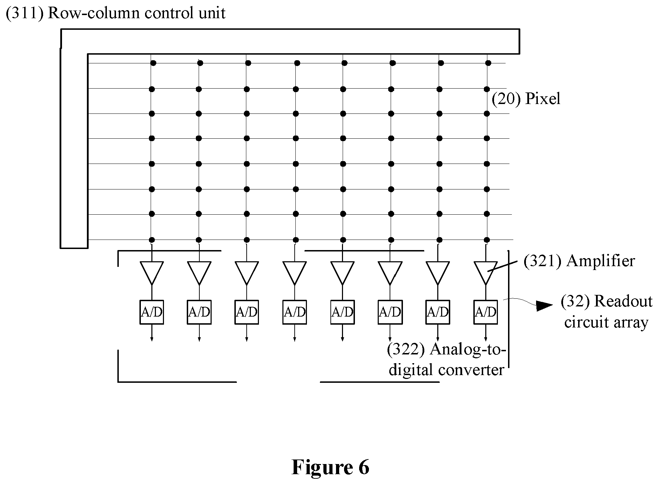

The matrix switch 31 in the intermediate frequency readout circuit 3 is configured to gate the intermediate frequency output network 23 to orderly output an intermediate frequency signal IFx. The array scale of the intermediate frequency readout circuit 3 is A*B, same as the array scale of the intermediate frequency output network 23. The matrix switch 31 is controlled by the control instruction unit 41 through the control interface 4131, is controlled by a row-column control unit 311 to gate rows and columns, and transmits the intermediate frequency signal IFx to the readout circuit array 32. The readout circuit array 32 includes P (P≤A*B) channels. As shown in Figure 6, each of the channels includes at least a power amplifier 321 and an analog-to-digital converter 322. The power amplifier 321 is configured to amplify the intermediate frequency signal. The analog-to-digital converter 322 is configured to convert the amplified intermediate frequency signal to a digital signal. The digital signal is transmitted from the readout circuit array 32 to the signal processing and control module 4.

### [Module 4-Signal processing and control module]

The control instruction unit 41 includes five control interfaces: a control interface 4112, a control interface 4131, a control interface 4161, a control interface 4173, and a control interface 4174. The control instruction unit 41 is controlled by a manual control unit 52.

### [Module 6-Baseband signal generation module]

A baseband output signal from a baseband signal control unit 61 and a clock signal (having a frequency of f₆₀₃) from a clock 63 are inputted to a direct digital frequency synthesizer 62, and a synthesized signal (having a frequency of f₆₀₂) is outputted. The clock signal is inputted to a D-multiplied frequency multiplier 64, and a D-multiplied signal (having a frequency f₆₀₄, and f₆₀₄=D*f₆₀₃) is outputted. The D-multiplied signal is inputted to a baseband mixer 65, and a mixed frequency signal (having a frequency f₆₀₅, and f₆₀₅=f₆₀₄-f₆₀₂) is outputted. The mixed signal is inputted to an E-multiplied frequency multiplier 66, and a signal 606 (having a frequency f₆₀₆, and f₆₀₆= E*f₆₀₅) is outputted. The baseband signal generated by the module has a low phase noise and a pure frequency spectrum.

### [Module 7-Terahertz transmission signal and local oscillation signal module]

The signal 606 is inputted to an N-multiplied frequency multiplier 71, and an N-multiplied signal (having a frequency f₇₀₁, and f₇₀₁=N*f₆₀₆) is outputted. The N-multiplied frequency signal is inputted to a first drive amplifier 72, and a first amplified signal (having a frequency f₇₀₂, and f₇₀₂=f₇₀₁) is outputted. The first amplified signal is controlled by the first single-pole double-throw switch 73 to be transmitted via a channel 73A or a channel 73B. The first amplified signal is directly fed into a local oscillator power distribution network 24 in a case that the first amplified signal is transmitted via the channel 73A. The first amplified signal is controlled by the second single-pole double-throw switch 74 to be transmitted via a channel 74A or a channel 74B in a case that the first amplified signal is transmitted via the channel 73B. The first amplified signal is inputted, via the coupler (75), to the M-multiplied frequency multiplier 77 and the second drive amplifier 76 in a case that the first amplified signal is transmitted via the channel 74A. The first amplified signal is directly inputted to the M-multiplied frequency multiplier 77 in a case that the first amplified signal is transmitted via the channel 74B, and an M-multiplied signal (having a frequency f₇₀₇, and f₇₀₇=M*f₇₀₂) is outputted. The signal outputted by the M-multiplied frequency multiplier 77 is transmitted into a free space by using the terahertz horn antenna 78.

### [Four operation modes of the system]

The terahertz multimode real-time imaging system operates in the following four operation modes: mode 1-passive non-coherent mode, mode 2-passive coherent mode, mode 3-active non-coherent mode, and mode 4-active coherent mode. The manual control unit 52 transmits instructions via the control instruction unit 41 to the baseband signal generation module 6 and the terahertz transmission signal and local oscillation signal module 7 to control the switching of the four operation modes.

For the passive non-coherent mode, in a case that the control interface 4161 receives a turn-off instruction, the baseband signal generation module 6 and the terahertz transmission signal and local oscillation signal module 7 stop operating, then the terahertz multimode real-time imaging system operates in the passive non-coherent mode.

For the passive coherent mode, in a case that the control interface 4161 receives a turn-on instruction, the control interface 4173 transmits an instruction to the first single-pole double-throw switch 73 to connect channel 73A and disconnect channel 73B, then the terahertz multimode real-time imaging system operates in the passive coherent mode.

For the active non-coherent mode, in a case that the control interface 4161 receives a turn-on instruction, the control interface 4173 transmits an instruction to the first single-pole double-throw switch 73 to disconnect channel 73A and connect channel 73B, and the control interface 4174 transmits an instruction to the second single-pole double-throw switch 74 to connect channel 74B and disconnect channel 74A, then the terahertz multimode real-time imaging system operates in the active non-coherent mode.

For the active coherent mode, in a case that the control interface 4161 receives a turn-on instruction, the control interface 4173 transmits an instruction to the first single-pole double-throw switch 73 to disconnect channel 73A and connect channel 73B, and the control interface 4174 transmits an instruction to the second single-pole double-throw switch 74 to connect channel 74A and disconnect channel 74B, then the terahertz multimode real-time imaging system operates in the active coherent mode.

### [Operation manner]

The terahertz multimode real-time imaging system operates in the following manner.

First, the display module 5, the signal processing and control module 4, the intermediate frequency readout circuit 3, the terahertz focal plane imaging array front-end module 2, and the terahertz quasi-optical feeding module 1 are activated in sequence. The terahertz multimode real-time imaging system operates in the passive non-coherent mode and performs all-weather silent monitoring.

Then, in a case that no abnormality is detected in the all-weather silent monitoring, the baseband signal generation module 6 and the terahertz transmission signal and local oscillation signal module 7 are periodically activated with a period of T0, and the channel 73A is connected. The terahertz multimode real-time imaging system operates in the passive coherent mode. Thus, the system sensitivity and the operating distance may be improved periodically.

In the all-weather silent monitoring, in a case that contrast of an image deteriorates due to an environmental factor, the baseband signal generation module 6 and the terahertz transmission signal and local oscillation signal module 7 are activated, channel 73B and 74B are respectively connected, and the terahertz multimode real-time imaging system operates in the active non-coherent mode.

In the all-weather silent monitoring, in a case that an abnormality is detected, channel 73B and channel 74A are respectively connected, and the terahertz multimode real-time imaging system operates in the active coherent mode to image and track a target. In addition, the servo control unit 12 adjusts the focal length and the field of view of the terahertz quasi-optical lens group 11 based on an instruction from the control interface 4112 to perform high-resolution imaging on the target.

In a case that the suspected dangerous target is eliminated, the baseband signal generation module 6 and the terahertz transmission signal and local oscillation signal module 7 are stopped, and the terahertz multimode real-time imaging system operates in the passive non-coherent mode and performs all-weather silent monitoring.

According to the embodiments of the present disclosure, a terahertz signal from a target and a terahertz signal from environment are inputted to a terahertz quasi-optical feeding module, a terahertz focal plane imaging array front-end module converts the terahertz signals to intermediate frequency signals, and four operation modes of passive non-coherent mode, passive coherent mode, active non-coherent mode, and active coherent mode are flexibly switched by switching the channels respectively for a transmission signal and a local oscillation signal. According to the embodiments of the present disclosure, switching between a coherent reception mode and a non-coherent reception mode is performed by using a terahertz focal plane array chip based on terahertz Schottky diodes and a local oscillator power distribution network, thereby realizing staring imaging and obtaining phase information simultaneously. According to the embodiments of the present disclosure, a two-dimensional high-density array is formed with flat and compact terahertz pixels, facilitating flexible design of array scale and flexible splicing of sub-arrays with different scales. According to the embodiments of the present disclosure, positions of lenses in a terahertz quasi-optical lens group are controlled by a servo control unit, thereby controlling the focal length and the field of view of imaging. According to the embodiments of the present disclosure, a baseband signal having high purity and low phase noise is obtained by performing baseband mixing, thereby ensuring the sensitivity of the system operating in the passive coherent mode, the active non-coherent mode, and the active coherent mode.

## Claims

1. A terahertz multimode real-time imaging system, comprising: a terahertz quasi-optical feeding module (1), a terahertz focal plane imaging array front-end module (2), an intermediate frequency readout circuit (3), a signal processing and control module (4), a display module (5), a baseband signal generation module (6), and a terahertz transmission signal and local oscillation signal module (7), wherein
the terahertz quasi-optical feeding module (1) is configured to receive a terahertz signal from a target and transmit the terahertz signal to the terahertz focal plane imaging array front-end module (2);
the terahertz focal plane imaging array front-end module (2) is configured to convert the received terahertz signal to a terahertz current, perform frequency reduction on the terahertz current to obtain an intermediate frequency signal, and transmit the intermediate frequency signal to the intermediate frequency readout circuit (3);
the intermediate frequency readout circuit (3) is configured to obtain the intermediate frequency signal from the terahertz focal plane imaging array front-end module (2), perform amplification and analog-to-digital conversion on the intermediate frequency signal to obtain a digital signal, and transmit the digital signal to the signal processing and control module (4);
the signal processing and control module (4) is configured to receive and process the digital signal to generate an image, and transmit the image to the display module (5);
the display module (5) is configured to receive and display the image and provide a manual control interface;
the baseband signal generation module (6) is configured to generate a baseband signal and transmit the baseband signal to the terahertz transmission signal and local oscillation signal module (7); and
the terahertz transmission signal and local oscillation signal module (7) is configured to perform frequency multiplication and amplification on the baseband signal to generate a local oscillation signal and a terahertz transmission signal, wherein the local oscillation signal is transmitted to the terahertz focal plane imaging array front-end module (2) to serve as a local oscillator reference signal, and the terahertz transmission signal irradiates the target;
wherein the terahertz multimode real-time imaging system is **characterized in that**:
the baseband signal generation module (6) comprises a baseband signal control unit (61), a direct digital frequency synthesizer (62), a clock (63), a D-multiplied frequency multiplier (64), a baseband mixer (65), and an E-multiplied frequency multiplier (66);
a baseband output signal from the baseband signal control unit (61) and a clock signal from the clock (63) are inputted to the direct digital frequency synthesizer (62);
the direct digital frequency synthesizer (62) is configured to synthesize the baseband output signal and the clock signal to obtain a synthesized signal and input the synthesized signal to the baseband mixer (65);
the D-multiplied frequency multiplier (64) is configured to receive and process the clock signal (f₆₀₃) to multiply the frequency of the clock signal (f₆₀₃) by a factor of D in order to obtain a D-multiplied signal (f₆₀₄), and input the D-multiplied signal (f₆₀₄) to the baseband mixer (65);
the baseband mixer (65) is configured to receive and process the D-multiplied signal (f₆₀₄) and the synthesized signal to obtain a mixed signal (f₆₀₅), and input the mixed signal (f₆₀₅) to the E-multiplied frequency multiplier (66);
the E-multiplied frequency multiplier (66) is configured to receive and process the mixed signal (f₆₀₅) to multiply the frequency of the mixed signal (f₆₀₅) by a factor of E in order to obtain an E-multiplied signal (f₆₀₆), and input the E-multiplied signal (f₆₀₆) to the terahertz transmission signal and local oscillation signal module (7);
the terahertz transmission signal and local oscillation signal module (7) comprises an N-multiplied frequency multiplier (71), a first drive amplifier (72), a first single-pole double-throw switch (73), a second single-pole double-throw switch (74), a coupler (75), a second drive amplifier (76), an M-multiplied frequency multiplier (77), and a terahertz horn antenna (78);
the N-multiplied frequency multiplier (71) is configured to receive and process the E-multiplied signal (f₆₀₆) to multiply the frequency of the E-multiplied signal (f₆₀₆) by a factor of N in order to obtain an N-multiplied signal (f₇₀₁), and input the N-multiplied signal (f₇₀₁) to the first drive amplifier (72);
the first drive amplifier (72) is configured to receive and process the N-multiplied signal to obtain a first amplified signal;
the first amplified signal is controlled by the first single-pole double-throw switch (73) to be transmitted via a channel 73A or a channel 73B, wherein the first amplified signal is directly fed into a local oscillator power distribution network (24) in a case that the first amplified signal is transmitted via the channel 73A, and the first amplified signal is controlled by the second single-pole double-throw switch (74) to be transmitted via a channel 74A or a channel 74B in a case that the first amplified signal is transmitted via the channel 73B; and
the first amplified signal is inputted, via the coupler (75), to the M-multiplied frequency multiplier (77) and the second drive amplifier (76) in a case that the first amplified signal is transmitted via the channel 74A, wherein the second drive amplifier (76) is configured to directly feed the first amplified signal into the local oscillator power distribution network (24); and the first amplified signal is directly inputted to the M-multiplied frequency multiplier (77) in a case that the first amplified signal is transmitted via the channel 74B, wherein the M-multiplied frequency multiplier (77) is configured to receive and process the first amplified signal to multiply the frequency of the first amplified signal by a factor of M in order to obtain an M-multiplied signal, and transmit the M-multiplied signal into a free space by using the terahertz horn antenna (78).

2. The terahertz multimode real-time imaging system according to claim 1, wherein the terahertz quasi-optical feeding module (1) comprises a terahertz quasi-optical lens group (11) and a servo control unit (12), wherein
the terahertz quasi-optical lens group (11) is connected to the servo control unit (12), and the servo control unit (12) is configured to control displacement of the terahertz quasi-optical lens group (11) to adjust a focal length and a field of view of the terahertz quasi-optical lens group (11); and
the terahertz quasi-optical lens group (11) is configured to receive the terahertz signal from the target and transmit the terahertz signal to the terahertz focal plane imaging array front-end module (2).

3. The terahertz multimode real-time imaging system according to claim 1, wherein the terahertz focal plane imaging array front-end module (2) comprises a terahertz micro lens array (21), a terahertz focal plane array chip (22), an intermediate frequency output network (23), and a local oscillator power distribution network (24), wherein
the terahertz micro lens array (21) and the terahertz focal plane array chip (22) are configured to operate together to convert the received terahertz signal to the terahertz current and perform frequency reduction on the terahertz current to obtain the intermediate frequency signal;
the intermediate frequency output network (23) is configured to obtain the intermediate frequency signal from the terahertz focal plane array chip (22); and
the local oscillator power distribution network (24) is configured to provide a point-to-point local oscillator power for a detection/mixing antenna unit (220) in the terahertz focal plane array chip (22).

4. The terahertz multimode real-time imaging system according to claim 1, wherein the intermediate frequency readout circuit (3) comprises a matrix switch (31) and a readout circuit array (32), wherein
the matrix switch (31) is controlled by a control instruction unit (41) to gate rows and columns to transmit the intermediate frequency signal to the readout circuit array (32), and
the readout circuit array (32) comprises a number of channels, wherein the number of the channels corresponds to an array scale of the matrix switch (31), each of the channels comprises a power amplifier (321) and an analog-to-digital converter (322), the power amplifier (321) is configured to amplify the intermediate frequency signal, and the analog-to-digital converter (322) is configured to convert the amplified intermediate frequency signal to the digital signal and transmit the digital signal to the signal processing and control module (4).

5. The terahertz multimode real-time imaging system according to claim 1, wherein the signal processing and control module (4) comprises the control instruction unit (41) and a signal processing unit (42), wherein
the signal processing unit (42) is configured to receive and process the digital signal to generate the image, analyze features of the target, and transmit the image to the display module (5), and
the control instruction unit (41) is configured to generate control instructions for respectively controlling the servo control unit (12) in the terahertz quasi-optical feed module (1) to adjust a focal length and a field of view of the terahertz quasi-optical lens group (11), controlling the matrix switch (31) in the intermediate frequency readout circuit (3) to determine a readout sequence of pixels in the terahertz focal plane imaging array front-end module (2), and controlling a baseband signal control unit (61) in the baseband signal generation module (6) to generate a baseband signal wave.

6. The terahertz multimode real-time imaging system according to claim 4, wherein
the display module (5) comprises a display screen (51) and a manual control unit (52), the manual control unit (52) is configured to control the control instruction unit (41), and the display screen (51) is configured to receive and display the image.

7. The terahertz multimode real-time imaging system according to claim 1, wherein in a case that f₆₀₁ represents a frequency of the baseband output signal and f₆₀₃ represents a frequency of the clock signal, f₆₀₂, obtained based on an equation of f₆₀₂=f₆₀₁+ f₆₀₃, represents a frequency of the synthesized signal, a frequency f₆₀₄ of the D-multiplied signal is obtained based on an equation of f₆₀₄=D*f₆₀₃, a frequency f₆₀₅ of the mixed signal f₆₀₅=f₆₀₄-f₆₀₂, and a frequency f₆₀₆ of the E-multiplied signal is obtained based on an equation of f₆₀₆= E*f₆₀₅.

8. The terahertz multimode real-time imaging system according to claim 1, wherein a frequency f₇₀₁ of the N-multiplied signal is obtained based on an equation of f₇₀₁=N*f₆₀₆, a frequency f₇₀₂ of the first amplified signal is obtained based on an equation of f₇₀₂=f₇₀₁, and a frequency f₇₀₇ of the M-multiplied signal is obtained based on an equation of f₇₀₇=M*f₇₀₂.

## Patentansprüche

1. Terahertz-Multimode-Echtzeit-Bildgebungssystem, umfassend: ein quasi-optisches Terahertz-Speisemodul (1), ein Terahertz-Fokalebenen-Bildgebungs-Array-Frontendmodul (2), eine Zwischenfrequenzausleseschaltung (3), ein Signalverarbeitungs- und Steuerungsmodul (4), ein Anzeigemodul (5), ein Basisbandsignal-Erzeugungsmodul (6) und ein Terahertz-Übertragungssignal- und Lokaloszillationssignalmodul (7), wobei
das quasi-optische Terahertz-Speisemodul (1) konfiguriert ist, um ein Terahertz-Signal von einem Ziel zu empfangen und das Terahertz-Signal an das Terahertz-Fokalebenen-Bildgebungs-Array-Frontendmodul (2) zu übertragen;
das Terahertz-Fokalebenen-Bildgebungs-Array-Frontendmodul (2) konfiguriert ist, um das empfangene Terahertz-Signal in einen Terahertz-Strom umzuwandeln, eine Frequenzreduktion des Terahertz-Stroms durchzuführen, um ein Zwischenfrequenzsignal zu erlangen, und das Zwischenfrequenzsignal an die Zwischenfrequenzausleseschaltung (3) zu übertragen;
die Zwischenfrequenzausleseschaltung (3) konfiguriert ist, um das Zwischenfrequenzsignal von dem Terahertz-Fokalebenen-Bildgebungs-Array-Frontendmodul (2) zu erlangen, eine Verstärkung und eine Analog-Digital-Wandlung an dem Zwischenfrequenzsignal durchzuführen, um ein digitales Signal zu erlangen, und das digitale Signal an das Signalverarbeitungs- und Steuerungsmodul (4) zu übertragen;
das Signalverarbeitungs- und Steuerungsmodul (4) konfiguriert ist, um das digitale Signal zu empfangen und zu verarbeiten, um ein Bild zu erzeugen, und das Bild an das Anzeigemodul (5) zu übertragen;
das Anzeigemodul (5) konfiguriert ist, um das Bild zu empfangen und anzuzeigen und eine manuelle Steuerungsschnittstelle bereitzustellen;
das Basisbandsignal-Erzeugungsmodul (6) konfiguriert ist, um ein Basisbandsignal zu erzeugen und das Basisbandsignal an das Terahertz-Übertragungssignal- und Lokaloszillationssignalmodul (7) zu übertragen; und
das Terahertz-Übertragungssignal- und Lokaloszillationssignalmodul (7) konfiguriert ist, um eine Frequenzmultiplikation und Verstärkung des Basisbandsignals durchzuführen, um ein Lokaloszillationssignal und ein Terahertz-Übertragungssignal zu erzeugen, wobei das Lokaloszillationssignal an das Terahertz-Fokalebenen-Bildgebungs-Array-Frontendmodul (2) übertragen wird, um als Lokaloszillator-Referenzsignal zu dienen, und das Terahertz-Übertragungssignal das Ziel bestrahlt;
wobei das Terahertz-Multimode-Echtzeit-Bildgebungssystem **dadurch gekennzeichnet ist, dass**:
das Basisbandsignal-Erzeugungsmodul (6) eine Basisbandsignal-Steuereinheit (61), einen direkten digitalen Frequenzsynthesizer (62), einen Taktgeber (63), einen D-multiplizierten Frequenzvervielfacher (64), einen Basisbandmischer (65) und einen E-multiplizierten Frequenzvervielfacher (66) umfasst;
ein Basisbandausgangssignal von der Basisbandsignal-Steuereinheit (61) und ein Taktsignal von dem Taktgeber (63) in den direkten digitalen Frequenzsynthesizer (62) eingegeben werden;
der direkte digitale Frequenzsynthesizer (62) konfiguriert ist, um das Basisbandausgangssignal und das Taktsignal zu synthetisieren, um ein synthetisiertes Signal zu erlangen, und das synthetisierte Signal in den Basisbandmischer (65) einzugeben;
der D-multiplizierte Frequenzmultiplikator (64) konfiguriert ist, um das Taktsignal (f₆₀₃) zu empfangen und zu verarbeiten, um die Frequenz des Taktsignals (f₆₀₃)
mit dem Faktor D zu multiplizieren, um ein D-multipliziertes Signal (f₆₀₄) zu erlangen,
und das D-multiplizierte Signal (f₆₀₄) in den Basisbandmischer (65) einzugeben;
der Basisbandmischer (65) konfiguriert ist, um das D-multiplizierte Signal (f₆₀₄) und
das synthetisierte Signal zu empfangen und zu verarbeiten und, um ein gemischtes Signal (f₆₀₅) zu erlangen,
und das gemischte Signal (f₆₀₅) in den E-multiplizierten
Frequenzvervielfacher (66) einzugeben;
der E-multiplizierte Frequenzmultiplikator (66) konfiguriert ist, um das gemischte Signal (f₆₀₅) zu empfangen und zu verarbeiten, um die Frequenz des gemischten Signals (f₆₀₅)
mit einem Faktor E zu multiplizieren, um ein E-multipliziertes Signal (f₆₀₆) zu erlangen,
und das E-multiplizierte Signal (f₆₀₆) in das Terahertz-Übertragungssignal- und Lokaloszillationssignalmodul (7) einzugeben;
das Terahertz-Übertragungssignal- und Lokaloszillationssignalmodul (7) einen N-fachen Frequenzvervielfacher (71), einen ersten Antriebsverstärker (72), einen ersten einpoligen Wechselschalter (73), einen zweiten einpoligen Wechselschalter (74), einen Koppler (75), einen zweiten Antriebsverstärker (76), einen M-fachen Frequenzvervielfacher (77) und eine Terahertz-Hornantenne (78) umfasst;
der N-fache Frequenzmultiplizierer (71) konfiguriert ist, um das E-fache Signal (f₆₀₆) zu empfangen und zu verarbeiten, um die Frequenz des E-fachen Signals (f₆₀₆) mit einem Faktor N zu multiplizieren, um ein N-faches Signal (f₇₀₁) zu erlangen, und das N-fache Signal (f₇₀₁) in den ersten Treiberverstärker (72) einzugeben;
der erste Treiberverstärker (72) konfiguriert ist, um das N-multiplizierte Signal zu empfangen und zu verarbeiten, um ein erstes verstärktes Signal zu erlangen;
das erste verstärkte Signal durch den ersten einpoligen Wechselschalter (73) gesteuert wird, um über einen Kanal 73A oder einen Kanal 73B übertragen zu werden, wobei das erste verstärkte Signal direkt in ein Lokaloszillator-Leistungsverteilungsnetz (24) eingespeist wird, wenn das erste verstärkte Signal über den Kanal 73A übertragen wird, und das erste verstärkte Signal durch den zweiten einpoligen Wechselschalter (74) gesteuert wird, um über einen Kanal 74A oder einen Kanal 74B übertragen zu werden, wenn das erste verstärkte Signal über den Kanal 73B übertragen wird; und
das erste verstärkte Signal über den Koppler (75) in den M-multiplizierten Frequenzvervielfacher (77) und den zweiten Treiberverstärker (76) eingespeist wird, falls das erste verstärkte Signal über den Kanal 74A übertragen wird, wobei der zweite Treiberverstärker (76) konfiguriert ist, um das erste verstärkte Signal direkt in das Lokaloszillator-Leistungsverteilungsnetz (24) einzuspeisen; und das erste verstärkte Signal direkt in den M-multiplizierten Frequenzmultiplikator (77) in einem Fall eingegeben wird, dass das erste verstärkte Signal über den Kanal 74B übertragen wird, wobei der M-multiplizierte Frequenzmultiplikator (77) konfiguriert ist, um das erste verstärkte Signal zu empfangen und zu verarbeiten, um die Frequenz des ersten verstärkten Signals mit einem Faktor M zu multiplizieren, um
ein M-multipliziertes Signal zu erlangen und das M-multiplizierte Signal unter Verwendung der Terahertz-Hornantenne (78) in einen freien Raum zu übertragen.

2. Terahertz-Multimode-Echtzeit-Bildgebungssystem nach Anspruch 1, wobei das quasi-optische Terahertz-Speisemodul (1) eine quasi-optische Terahertz-Linsengruppe (11) und eine Servo-Steuereinheit (12) umfasst, wobei
die quasi-optische Terahertz-Linsengruppe (11) mit der Servo-Steuereinheit (12) verbunden ist, und die Servo-Steuereinheit (12) konfiguriert ist, um eine Verschiebung der quasi-optischen Terahertz-Linsengruppe (11) zu steuern, um eine Brennweite und ein Sichtfeld der quasi-optischen Terahertz-Linsengruppe (11) einzustellen; und
die quasi-optische Terahertz-Linsengruppe (11) konfiguriert ist, um das Terahertz-Signal von dem Zielobjekt zu empfangen und das Terahertz-Signal an das Terahertz-Fokalebenen-Bildgebungs-Array-Frontendmodul (2) zu übertragen.

3. Terahertz-Multimode-Echtzeit-Bildgebungssystem nach Anspruch 1, wobei das Terahertz-Fokalebenen-Bildgebungs-Array-Frontendmodul (2) ein Terahertz-Mikrolinsen-Array (21), einen Terahertz-Fokalebenen-Array-Chip (22), ein Zwischenfrequenzausgangsnetz (23) und ein Lokaloszillator-Leistungsverteilungsnetz (24) umfasst, wobei
das Terahertz-Mikrolinsen-Array (21) und der Terahertz-Fokalebenen-Array-Chip (22) konfiguriert sind, um zusammen betrieben zu werden, um das empfangene Terahertz-Signal in den Terahertz-Strom umzuwandeln und eine Frequenzreduktion an dem Terahertz-Strom durchzuführen, um das Zwischenfrequenzsignal zu erlangen;
das Zwischenfrequenzausgangsnetz (23) konfiguriert ist, um das Zwischenfrequenzsignal von dem Terahertz-Fokalebenen-Array-Chip (22) zu erlangen; und
das Lokaloszillator-Leistungsverteilungsnetz (24) konfiguriert ist, um eine Punkt-zu-Punkt-Lokaloszillatorleistung für eine Erfassungs-/Mischantenneneinheit (220) in dem Terahertz-Fokalebenen-Array-Chip (22) bereitzustellen.

4. Terahertz-Multimode-Echtzeit-Bildgebungssystem nach Anspruch 1, wobei die Zwischenfrequenzausleseschaltung (3) einen Matrixschalter (31) und ein Ausleseschaltungs-Array (32) umfasst, wobei
der Matrixschalter (31) durch eine Steuerbefehlseinheit (41) gesteuert wird, um Zeilen und Spalten zu schalten, um das Zwischenfrequenzsignal an das Ausleseschaltungs-Array (32) zu übertragen, und
das Ausleseschaltungs-Array (32) eine Anzahl von Kanälen umfasst, wobei die Anzahl der Kanäle einer Array-Skala des Matrixschalters (31) entspricht, jeder der Kanäle einen Leistungsverstärker (321) und einen Analog-Digital-Wandler (322) umfasst, der Leistungsverstärker (321) konfiguriert ist, um das Zwischenfrequenzsignal zu verstärken, und der Analog-Digital-Wandler (322) konfiguriert ist, um das verstärkte Zwischenfrequenzsignal in das digitale Signal umzuwandeln und das digitale Signal an das Signalverarbeitungs- und Steuerungsmodul (4) zu übertragen.

5. Terahertz-Multimode-Echtzeit-Bildgebungssystem nach Anspruch 1, wobei das Signalverarbeitungs- und Steuerungsmodul (4) die Steuerungsanweisungseinheit (41) und eine Signalverarbeitungseinheit (42) umfasst, wobei
die Signalverarbeitungseinheit (42) konfiguriert ist, um das digitale Signal zu empfangen und zu verarbeiten, um das Bild zu erzeugen, Merkmale des Ziels zu analysieren und das Bild an das Anzeigemodul (5) zu übertragen, und
die Steuerungsanweisungseinheit (41) konfiguriert ist, um Steuerungsanweisungen zum jeweiligen Steuern der Servo-Steuereinheit (12) in dem quasi-optischen Terahertz-Speisemodul (1), um eine Brennweite und ein Sichtfeld der quasi-optischen Terahertz-Linsengruppe (11) einzustellen, zum Steuern des Matrixschalters (31) in der Zwischenfrequenzausleseschaltung (3), um eine Auslesesequenz von Pixeln in dem Terahertz-Fokalebenen-Bildgebungs-Array-Frontendmodul (2) zu bestimmen, und zum Steuern einer Basisbandsignal-Steuereinheit (61) in dem Basisbandsignal-Erzeugungsmodul (6), um eine Basisbandsignalwelle zu erzeugen, zu erzeugen.

6. Terahertz-Multimode-Echtzeit-Bildgebungssystem nach Anspruch 4, wobei
das Anzeigemodul (5) einen Anzeigebildschirm (51) und eine manuelle Steuereinheit (52) umfasst, die manuelle Steuereinheit (52) konfiguriert ist, um die Steuerungsanweisungseinheit (41) zu steuern, und der Anzeigeschirm (51) konfiguriert ist, um das Bild zu empfangen und anzuzeigen.

7. Terahertz-Multimode-Echtzeit-Bildgebungssystem nach Anspruch 1, wobei in einem Fall, in dem f₆₀₁ eine Frequenz des Basisbandausgangssignals darstellt und f₆₀₃ eine Frequenz des Taktsignals darstellt, f₆₀₂, das basierend auf einer Gleichung f₆₀₂=f₆₀₁+ f₆₀₃ erlangt wird, eine Frequenz des synthetisierten Signals darstellt, eine Frequenz f₆₀₄ des D-multiplizierten Signals basierend auf einer Gleichung f₆₀₄=D*f₆₀₃ erlangt wird, eine Frequenz f₆₀₅ des gemischten Signals f₆₀₅=f₆₀₄-f₆₀₂ erlangt wird, und eine Frequenz f₆₀₆ des E-multiplizierten Signals basierend auf einer Gleichung f₆₀₆= E*f₆₀₅ erlangt wird.

8. Terahertz-Multimode-Echtzeit-Bildgebungssystem nach Anspruch 1, wobei eine Frequenz f₇₀₁ des N-multiplizierten
Signals basierend auf einer Gleichung f₇₀₁=N*f₆₀₆ erlangt wird, eine
Frequenz f₇₀₂ des ersten verstärkten Signals basierend auf einer Gleichung f₇₀₂=f₇₀₁ erlangt wird und eine Frequenz f₇₀₇ des M-multiplizierten Signals basierend auf einer Gleichung f₇₀₇=M*f₇₀₂ erlangt wird.

## Revendications

1. Système d'imagerie multimode térahertz en temps réel, comprenant : un module d'alimentation quasi-optique térahertz (1), un module frontal de matrice d'imagerie à plan focal térahertz (2), un circuit de lecture de fréquence intermédiaire (3), un module de traitement et de commande de signal (4), un module d'affichage (5), un module de génération de signal de bande de base (6), et un module de signal de transmission térahertz et de signal d'oscillation locale (7), dans lequel
le module d'alimentation quasi-optique térahertz (1) est configuré pour recevoir un signal térahertz d'une cible et transmettre le signal térahertz au module frontal de matrice d'imagerie à plan focal térahertz (2) ;
le module frontal de matrice d'imagerie à plan focal térahertz (2) est configuré pour convertir le signal térahertz reçu en un courant térahertz, effectuer une réduction de fréquence sur le courant térahertz pour obtenir un signal de fréquence intermédiaire, et transmettre le signal de fréquence intermédiaire au circuit de lecture de fréquence intermédiaire (3) ;
le circuit de lecture de fréquence intermédiaire (3) est configuré pour obtenir le signal de fréquence intermédiaire à partir du module frontal de matrice d'imagerie à plan focal térahertz (2), effectuer une amplification et une conversion analogique-numérique sur le signal de fréquence intermédiaire afin d'obtenir un signal numérique, et transmettre le signal numérique au module de traitement et de commande de signal (4) ;
le module de traitement et de commande de signal (4) est configuré pour recevoir et traiter le signal numérique afin de générer une image, et transmettre l'image au module d'affichage (5) ;
le module d'affichage (5) est configuré pour recevoir et afficher l'image et fournir une interface de commande manuelle ;
le module de génération de signal de bande de base (6) est configuré pour générer un signal de bande de base et transmettre le signal de bande de base au module de signal de transmission térahertz et de signal d'oscillation locale (7) ; et
le module de signal de transmission térahertz et de signal d'oscillation locale (7) est configuré pour effectuer une multiplication et une amplification de fréquence sur le signal de bande de base afin de générer un signal d'oscillation locale et un signal de transmission térahertz, dans lequel le signal d'oscillation locale est transmis au module frontal de matrice d'imagerie à plan focal térahertz (2) pour servir de signal de référence d'oscillateur local, et le signal de transmission térahertz irradie la cible ;
dans lequel le système d'imagerie multimode térahertz en temps réel est **caractérisé en ce que** :
le module de génération de signal de bande de base (6) comprend une
unité de commande de signal de bande de base (61),
un synthétiseur de fréquence numérique direct (62), une horloge (63), un multiplicateur de fréquence par D (64), un mélangeur de bande de base (65) et un multiplicateur de fréquence par E (66) ;
un signal de sortie de bande de base provenant de l'unité de commande de signal de bande de base (61) et un signal d'horloge provenant de l'horloge (63) sont introduits dans le synthétiseur de fréquence numérique direct (62) ;
le synthétiseur de fréquence numérique direct (62) est configuré pour synthétiser le signal de sortie de bande de base et le signal d'horloge afin d'obtenir un signal synthétisé et d'introduire le signal synthétisé dans le mélangeur de bande de base (65) ;
le multiplicateur de fréquence par D (64) est configuré pour recevoir et traiter le signal d'horloge (f₆₀₃) afin de multiplier la fréquence du signal d'horloge (f₆₀₃)
par un facteur D afin d'obtenir un signal multiplié par D (f₆₀₄),
et introduire le signal multiplié par D (f₆₀₄) dans le mélangeur de bande de base (65) ;
le mélangeur de bande de base (65) est configuré pour recevoir et traiter le signal multiplié par D (f₆₀₄) et
le signal synthétisé pour obtenir un signal mixte (f₆₀₅),
et introduire le signal mixte (f₆₀₅) dans le multiplicateur de fréquence
par E (66) ;
le multiplicateur de fréquence par E (66) est configuré pour recevoir et traiter le signal mixte (f₆₀₅) afin de multiplier la fréquence du signal mixte (f₆₀₅)
par un facteur E afin d'obtenir un signal multiplié par E (f₆₀₆) et introduire le signal multiplié par E (f₆₀₆) dans le module de signal de transmission térahertz et de signal d'oscillation locale (7) ;
le module de signal de transmission térahertz et de signal d'oscillation locale (7) comprend un multiplicateur de fréquence par N (71), un premier amplificateur de commande (72), un premier commutateur unipolaire bidirectionnel (73), un second commutateur unipolaire bidirectionnel (74), un coupleur (75), un second amplificateur de commande (76), un multiplicateur de fréquence par M (77) et une antenne conique térahertz (78) ;
le multiplicateur de fréquence par N (71) est configuré pour recevoir et traiter le signal multiplié par E (f₆₀₆) afin de multiplier la fréquence du signal multiplié par E (f₆₀₅) par un facteur N pour obtenir un signal multiplié par N (f₇₀₁),
et introduire le signal multiplié par N (f₇₀₁) dans le premier
amplificateur de commande (72) ;
le premier amplificateur de commande (72) est configuré pour recevoir et traiter le signal multiplié par N afin d'obtenir un premier signal amplifié ;
le premier signal amplifié est commandé par le premier commutateur unipolaire bidirectionnel (73) pour être transmis via un canal 73A ou un canal 73B, dans lequel le premier signal amplifié est directement injecté dans un réseau de distribution de puissance d'oscillateur local (24) dans un cas où le premier signal amplifié est transmis via le canal 73A, et le premier signal amplifié est commandé par le second commutateur unipolaire bidirectionnel (74) pour être transmis via un canal 74A ou un canal 74B dans un cas où le premier signal amplifié est transmis via le canal 73B ; et
le premier signal amplifié est introduit, via le coupleur (75), au multiplicateur de fréquence par M (77) et au second amplificateur de commande (76) dans un cas où le premier signal amplifié est transmis via le canal 74A, dans lequel le second amplificateur de commande (76) est configuré pour envoyer directement le premier signal amplifié dans le réseau de distribution de puissance d'oscillateur local (24) ; et le premier signal amplifié est directement introduit dans le multiplicateur de fréquence par M (77) dans un cas où le premier signal amplifié est transmis via le canal 74B, dans lequel le multiplicateur de fréquence par M (77) est configuré pour recevoir et traiter le premier signal amplifié afin de multiplier la fréquence du premier signal amplifié par un facteur M afin d'obtenir
un signal multiplié par M, et transmettre le signal multiplié par M dans un espace libre à l'aide de l'antenne conique térahertz (78).

2. Système d'imagerie multimode térahertz en temps réel selon la revendication 1, dans lequel le module d'alimentation quasi-optique térahertz (1) comprend un groupe de lentilles quasi-optiques térahertz (11) et une unité d'asservissement (12), dans lequel
le groupe de lentilles quasi-optiques térahertz (11) est connecté à l'unité d'asservissement (12), et l'unité d'asservissement (12) est configurée pour commander le déplacement du groupe de lentilles quasi-optiques térahertz (11) afin de régler une distance focale et un champ de vision du groupe de lentilles quasi-optiques térahertz (11) ; et
le groupe de lentilles quasi-optiques térahertz (11) est configuré pour recevoir le signal térahertz de la cible et transmettre le signal térahertz au module frontal de matrice d'imagerie à plan focal térahertz (2).

3. Système d'imagerie multimode térahertz en temps réel selon la revendication 1, dans lequel le module frontal de matrice d'imagerie à plan focal térahertz (2) comprend un réseau de micro-lentilles térahertz (21), une puce à réseau de plans focaux térahertz (22), un réseau de sortie à fréquence intermédiaire (23) et un réseau de distribution de puissance d'oscillateur local (24), dans lequel
le réseau de micro-lentilles térahertz (21) et la puce à réseau de plans focaux térahertz (22) sont configurés pour fonctionner ensemble afin de convertir le signal térahertz reçu en courant térahertz et d'effectuer une réduction de fréquence sur le courant térahertz afin d'obtenir le signal de fréquence intermédiaire ;
le réseau de sortie à fréquence intermédiaire (23) est configuré pour obtenir le signal de fréquence intermédiaire à partir de la puce à réseau de plans focaux térahertz (22) ; et
le réseau de distribution de puissance d'oscillateur local (24) est configuré pour fournir une puissance d'oscillateur local point à point pour une unité d'antenne de détection/mixage (220) dans la puce à réseau de plans focaux térahertz (22).

4. Système d'imagerie multimode térahertz en temps réel selon la revendication 1, dans lequel le circuit de lecture de fréquence intermédiaire (3) comprend un commutateur matriciel (31) et un réseau de circuits de lecture (32), dans lequel
le commutateur matriciel (31) est commandé par une unité d'instruction de commande (41) pour diriger des rangées et des colonnes afin de transmettre le signal de fréquence intermédiaire au réseau de circuits de lecture (32), et
le réseau de circuits de lecture (32) comprend un certain nombre de canaux, dans lequel le nombre de canaux correspond à une échelle de réseau du commutateur matriciel (31), chacun des canaux comprend un amplificateur de puissance (321) et un convertisseur analogique-numérique (322), l'amplificateur de puissance (321) est configuré pour amplifier le signal de fréquence intermédiaire, et le convertisseur analogique-numérique (322) est configuré pour convertir le signal de fréquence intermédiaire amplifié en signal numérique et transmettre le signal numérique au module de traitement et de commande de signal (4).

5. Système d'imagerie multimode térahertz en temps réel selon la revendication 1, dans lequel le module de traitement et de commande de signal (4) comprend l'unité d'instruction de commande (41) et une unité de traitement de signal (42), dans lequel
l'unité de traitement de signal (42) est configurée pour recevoir et traiter le signal numérique afin de générer l'image, d'analyser les caractéristiques de la cible et de transmettre l'image au module d'affichage (5), et
l'unité d'instruction de commande (41) est configurée pour générer des instructions de commande, respectivement afin de commander l'unité d'asservissement (12) dans le module d'alimentation quasi-optique térahertz (1) pour régler une distance focale et un champ de vision du groupe de lentilles quasi-optiques térahertz (11), de commander le commutateur matriciel (31) dans le circuit de lecture de fréquence intermédiaire (3) pour déterminer une séquence de lecture des pixels dans le module frontal de matrice d'imagerie à plan focal térahertz (2), et de commander une unité de commande de signal de bande de base (61) dans le module de génération de signal de bande de base (6) pour générer une onde de signal de bande de base.

6. Système d'imagerie multimode térahertz en temps réel selon la revendication 4, dans lequel
le module d'affichage (5) comprend un écran d'affichage (51) et une unité de commande manuelle (52), l'unité de commande manuelle (52) est configurée pour commander l'unité d'instruction de commande (41), et l'écran d'affichage (51) est configuré pour recevoir et afficher l'image.

7. Système d'imagerie multimode térahertz en temps réel selon la revendication 1, dans lequel, dans un cas où f₆₀₁ représente une fréquence du signal de sortie de bande de base et f₆₀₃ représente une fréquence du signal d'horloge, f₆₀₂, obtenue sur la base d'une équation de f₆₀₂ = f₆₀₁ + f₆₀₃, représente une fréquence du signal synthétisé, une fréquence f₆₀₄ du signal multiplié par D est obtenue sur la base d'une équation de f₆₀₄ = D*f₆₀₃, une fréquence f₆₀₅ du signal mixte f₆₀₅=f₆₀₄-f₆₀₂, et une fréquence f₆₀₆ du signal multiplié par E est obtenue sur la base d'une équation de f₆₀₆=E*f₆₀₅.

8. Système d'imagerie multimode térahertz en temps réel selon la revendication 1, dans lequel une
fréquence f₇₀₁ du signal multiplié
par N est obtenue sur la base d'une équation de f₇₀₁=N*f₆₀₆, une
fréquence f₇₀₂ du premier signal amplifié est obtenue sur la base d'une équation de f₇₀₂=f₇₀₁, et une fréquence f₇₀₇ du signal multiplié par M est obtenue sur la base d'une équation de f₇₀₇=M*f₇₀₂.
